# EUROPEAN PATENT SPECIFICATION

(11) **EP 1 864 505 B1**
(45) Date of publication and mention of the grant of the patent: **15.01.2020**
(21) Application number: 06728192.3
(22) Date of filing: 29.03.2006
(51) Int. Cl.: G06T 7/292

(54) **REAL-TIME OBJECTS TRACKING AND MOTION CAPTURE IN SPORTS EVENTS**
ECHTZEIT-OBJEKTEVERFOLGUNG UND BEWEGUNGSERFASSUNG IN SPORTEREIGNISSEN
SUIVI ET CAPTURE DE MOUVEMENTS D'OBJETS EN TEMPS REEL AU COURS D'EVENEMENTS SPORTIFS

(30) Priority: 29.03.2005 US 666468 P
(43) Date of publication of application: 12.12.2007
(73) Proprietor: Sportvu Ltd., 58855 Holon (IL)
(72) Inventor: TAMIR, Michael, 69122 Tel Aviv (IL); OZ, Gal, 44100 Kfar Saba (IL)
(74) Representative: Algemeen Octrooi- en Merkenbureau B.V.
(86) International application number: PCT/IL2006/000388
(87) International publication number: WO 2006/103662

(56) References cited:
- EP-A1- 0 847 201
- EP-A2- 1 480 450
- EP-A2- 1 757 087
- BE-A6- 1 014 748
- US-A- 5 513 854
- US-A- 5 923 365
- US-A- 6 124 862
- US-A1- 2004 062 450
- US-A1- 2004 109 007
- US-B1- 6 674 877
- KOYAMA T ET AL: "Live mixed-reality 3D video in soccer stadium" MIXED AND AUGMENTED REALITY, 2003. PROCEEDINGS. THE SECOND IEEE AND AC M INTERNATIONAL SYMPOSIUM ON 7-10 OCT. 2003, PISCATAWAY, NJ, USA,IEEE, 7 October 2003 (2003-10-07), pages 178-187, XP010662809 ISBN: 978-0-7695-2006-3

## Description

### FIELD OF THE INVENTION

The present invention relates in general to real-time object tracking and motion capture in sports events and in particular to a "non-intrusive" system for real-time object localization according to the preamble of claim 1 and a "non-intrusive" method for tracking, identifying and capturing the motion of athletes and objects like balls and cars using peripheral equipment according to the preamble of method claim 9.

### BACKGROUND OF THE INVENTION

Current sport event object monitoring and motion capture systems use mounted electrical or optical devices in conjunction with arena deployed transceivers for live tracking and identification or image processing based "passive" methods for non-real-time match analysis and delayed replays. The existing tracking systems are used mainly to generate athletes/animals/players performance databases and statistical event data mainly for coaching applications. Exemplary systems and methods are disclosed in US Patents No. 5,363,897, 5,513,854, 6,124,862 and 6,483,511. In addition, EP 1480450A2 and EP 0847201A1 deal with cameras positioned around a sports field. Also EP 1757087 discloses a system and method according to the preambles of device claim 1 and method claim 9.

Current motion capture methods use multiple electro-magnetic sensors or optical devices mounted on the actor's joints to measure the three dimensional (3D) location of body organs (also referred to herein as body sections, joints or parts). "Organs" refer to head, torso, limbs and other segmentable body parts. Some organs may include one or more joints. Motion capture methods have in the past been applied to isolated (single) actors viewed by dedicated TV cameras and using pattern recognition algorithms to identify, locate and capture the motion of the body parts.

The main disadvantage of all known systems and methods is that none provide a "nonintrusive" way to track, identify and capture the full motion of athletes, players and other objects on the playing field in real-time. Real-time non-intrusive motion capture (and related data) of multiple entities such as players in sports events does not yet exist. Consequently, to date, such data has not been used in computer games to display the 3D representation of a real game in real time.

There is therefore a need for, and it would be advantageous to have "non-intrusive" peripheral system and methods to track, identify and capture full motion of athletes, players and other objects on the playing field in real-time. It would further be advantageous to have the captured motion and other attributes of the real game be transferable in real time to a computer game, in order to provide much more realistic, higher fidelity computer sports games.

### SUMMARY OF THE INVENTION

The present invention discloses "non-intrusive" peripheral systems and methods to track, identify various acting entities and capture the full motion of these entities (also referred to as "objects") in a sports event. In the context of the present invention, "entities" refer to any human figure involved in a sports activity (e.g. athletes, players, goal keepers, referees, etc.), motorized objects (cars, motorcycles, etc) and other innate objects (e.g. balls) on the playing field. The present invention further discloses real-time motion capture of more than one player implemented with image processing methods. Inventively and unique to this invention, captured body organs data can be used to generate a 3D display of the real sporting event using computer games graphics.

The real-time tracking and identification of various acting entities and capture of their full motion is achieved using multiple TV cameras (either stationary or pan/tilt/zoom cameras) peripherally deployed in the sports arena. This is done in such a way that any given point on the playing field is covered by at least one camera and a processing unit performing objects segmentation, blob analysis and 3D objects localization and tracking. Algorithms needed to perform these actions are well known and described for example in J. Pers and S. Kovacic, "A system for tracking players in sports games by computer vision", Electrotechnical Review 67(5): 281-288, 2000, and in a paper by T. Matsuyama and N. Ukita, "Real time multi target tracking by a cooperative distributed vision system", Dept. of Intelligent Science and Technology, Kyoto University, Japan and references therein.

Although the invention disclosed herein may be applied to a variety of sporting events, in order to ease its understanding it will be described in detail with respect to soccer games.

Most real-time tracking applications require live continuous identification of all players and other objects on the playing field. The continuous identification is achieved either "manually" using player tracking following an initial manual identification (ID) and manual remarking by an operator when a player's ID is lost, or automatically by the use of general game rules and logics, pattern recognition for ball identification and especially - identification of the players jersey (shirt) numbers or other textures appearing on their uniforms. In contrast with prior art, the novel features provided herein regarding object identification include:
(1) In an embodiment in which identification is done manually by an operator, providing an operator with a good quality, high magnification image of a "lost player" to remark the player's identification (ID). The provision is made by a robotic camera that can automatically aim onto the last known location or a predicted location of the lost player. It is assumed that the player could not move too far away from the last location, since the calculation is done in every frame, i.e. in a very short period of time. The robotic camera is operative to zoom in on the player.
(2) In an automatic identification, operator-free embodiment, automatically extracting the ID of the lost player by capturing his jersey number or another pattern on his outfit. This is done through the use of a plurality of robotic cameras that aim onto the last location above. In this case, more than one robotic camera is needed because the number is typically on the back side of the player's shirt. The "locking" on the number, capturing and recognition can be done by well known pattern recognition methods, e.g. the ones described in US Patent No. 5353392 to Luquet and Rebuffet and US Patent No. 5264933 to Rosser et al.
(3) In another automatic identification, operator-free embodiment, assigning an automatic ID by using multiple fixed high resolution cameras (the same cameras used for motion capture) and pattern recognition methods to recognize players' jersey numbers as before.

These features, alone or in combination, appear in different embodiments of the methods disclosed herein.

It is within the scope of the present invention to identify and localize the different body organs of the players in real-time using high resolution imaging and pattern recognition methods. Algorithms for determination of body pose and real time tracking of head, hands and other organs, as well as gestures recognition of an isolated human video image are known, see e.g. C. Wren et al.. "Pfinder: real time tracking of the human body", IEEE Transactions on Pattern Analysis and Machine Intelligence, 19(7):780-785, 1997 and A. Aagarwal and B. Triggs "3D human pose from silhouettes by relevance vector regression", International Conference on Computer Vision & Pattern Recognition, pages II 882-888, 2004 and references therein. The present invention advantageously discloses algorithms for automatic segmentation of all players on the playing field, followed by pose determination of all segmented players in real time. A smooth dynamic body motion from sequences of multiple two-dimensional (2D) views may then be obtained using known algorithms, see e.g. H. Sidenbladh, M. Black and D. Fleet, "Stochastic tracking of 3D human figures using 2D image motion" in Proc. of the European Conference On Computer Vision, pages 702-718, 2000.

It is also within the scope of the present invention to automatically create a 3D model representing the player's pose and to assign a dynamic behavior to each player based on the 2D location (from a given camera viewpoint) of some of his body organs or based on the 3D location of these organs. The location is calculated by triangulation when the same organ is identified by two overlapping TV cameras.

It is further within the scope of the present invention to use the real-time extracted motion capture data to generate instant 3D graphical replays deliverable to all relevant media (TV, web, cellular devices) where players are replaced by their graphical models to which the real player's pose and dynamic behavior are assigned. In these graphical replays, the 3D location of the capturing virtual camera can be dynamically changed.

The players and ball locations and motion capture data can also be transferred via a telecommunications network such as the Internet (in real-time or as a delayed stream) to users of known sports computer games such as "FIFA 2006" of Electronic Arts (P.O. Box 9025, Redwood City, CA 94063), in order to generate in real-time a dynamic 3D graphical representation of the "real" match currently being played, with the computer game's players and stadium models. A main advantage of such a representation over a regular TV broadcast is its being 3D and interactive. The graphical representation of player and ball locations and motion capture data performed in a delayed and non-automatic way (in contrast to the method described herein), is described in patent application WO9846029 by Sharir et al.

Also inventive to the current patent application is the automatic real time representation of a real sports event on a user's computer using graphical and behavioral models of computer games. The user can for example choose his viewpoint and watch the entire match live from the eyes of his favorite player. The present invention also provides a new and novel reality-based computer game genre, letting the users guess the player's continued actions starting with real match scenarios.

It is further within the scope of the present invention to use the player/ball locations data extracted in real-time for a variety of applications as follows:
(1) (Semi-) automatic content based indexing, storage and retrieval of the event video (for example automatic indexing and retrieval of the game's video according to players possessing the ball, etc). The video can be stored in the broadcaster's archive, web server or in the viewer's Personal Video Recorder.
(2) Rigid model 3D or 2D graphical live (or instant replays) representations of plays
(3) Slaving a directional microphone to the automatic tracker to "listen" to a specific athlete (or referee) and generation of an instant "audio replay".
(4) Slaving a robotic camera onto an identified and tracked player to generate single player video clips.
(5) Generation of a "telestrator clip" with automatic "tied to objects" graphics for the match commentator.
(6) Automatic creation of teams and players performance database for sports computer games developers and for "fantasy games", to increase game's fidelity through the usage of real data collected in real matches.

According to the present invention there is provided a system for real-time object localization and tracking in a sports event comprising a plurality of fixed cameras positioned at a single location relative to a sports playing field and operative to capture video of the playing field including objects located therein, an image processing unit operative to receive video frames from each camera and to detect and segment at least some of the objects in at least some of the frames using image processing algorithms, thereby providing processed object information; and a central server operative to provide real-time localization and tracking information on the detected objects based on respective processed object information.

In an embodiment, the system further comprises a graphical overlay server coupled to the central server and operative to generate a graphical display of the sports event based on the localization and tracking information.

In an embodiment, the system further comprises a statistics server coupled to the central server and operative to calculate statistical functions related to the event based on the localization and tracking information.

According to the present invention there is provided a system for real-time object localization, tracking and personal identification of players in a sports event as defined in claim 1.

In some embodiments, the system includes a plurality of robotic cameras, the object of interest is a player having an identifying shirt detail, and the system is operative to automatically identify the player from at least one detailed view that captures and provides the identifying shirt item.

In an embodiment, .at least one robotic camera may be slaved onto an identified and tracked player to generate single player video clips.

In an embodiment, the system further comprises a graphical overlay server coupled to the central server and operative to generate a schematic playing field template with icons representing the objects.

In an embodiment, the system further comprises a statistics server coupled to the central server and operative to calculate statistical functions related to the sports event based on the localization and tracking information.

In an embodiment, the system further comprises a first application server operative to provide automatic or semiautomatic content based indexing, storage and retrieval of a video of the sports event.

In an embodiment, the system further comprises a first application server a second application server operative to provide a rigid model two dimensional (2D) or three dimensional (3D) graphical representations of plays in the sports event.

In an embodiment, the system is operative to generate a telestrator clip with automatic tied -to-objects graphics for a match commentator.

In an embodiment, the system is operative to automatically create team and player performance databases for sports computer game developers and for fantasy games, whereby the fidelity of the computer game is increased through the usage of real data collected in real matches.

In an embodiment, the system further comprises a graphical overlay server coupled to the central server and operative to generate a schematic playing field template with icons representing the objects;

In an embodiment, the system further comprises a statistics server coupled to the central server and operative to calculate statistical functions related to the event based on the localization and tracking information.

In an embodiment the system further comprises a three-dimensional (3D) graphics application server operative to generate a three dimensional (3D) graphical representation of the sports event for use in a broadcast event.

According to the present invention there is provided, in a sports event taking place on a playing field, a method for locating, tracking and assigning objects to respective identity group in real-time, as defined in claim 9.

### BRIEF DESCRIPTION OF THE DRAWINGS

For a better understanding of the present invention and to show more clearly how it could be applied, reference will now be made, by way of example only, to the accompanying drawings in which:
FIG. 1 shows the various entities and objects appearing in an exemplary soccer game;
FIG. 2a shows a general block diagram of a system for real-time object tracking and motion capture in sports events according to the present invention;
FIG. 2b shows a schematic template of the playing field with player icons.
FIG. 3 shows a flow chart of a process to locate and track players in a team and assign each player to a particular team in real-time;
FIG. 4 shows a flow chart of an automatic system setup steps;
FIG. 5a shows a block diagram of objects tracking and motion capture system with a single additional robotic camera used for manual players' identification;
FIG. 5b shows a flow chart of a method for players' identification, using the system of FIG. 5a;
FIG. 6a shows a block diagram of objects tracking and motion capture system including means for automatic players' identification using additional robotic cameras and a dedicated Identification Processing Unit.
FIG. 6b shows a flow chart of a method for individual player identification, using the system of FIG. 6a;
FIG. 7a shows a block diagram of objects tracking and motion capture system including means for automatic players identification using high-resolution fixed cameras only (no robotic cameras);
FIG. 7b shows schematically details of an image Processing and Player Identification Unit used in the system of FIG. 7a;
FIG. 7c shows the process of full motion capture of a player;
FIG. 8 shows an embodiment of a system of the present invention used to generate a "virtual camera flight" type effect;
FIG. 9 shows schematically the generation of a virtual camera flight clip;
FIG. 10 shows a flow chart of a process of virtual camera flight frame synthesizing;

### DETAILED DESCRIPTION OF THE PREFERRED EMBODIMENTS

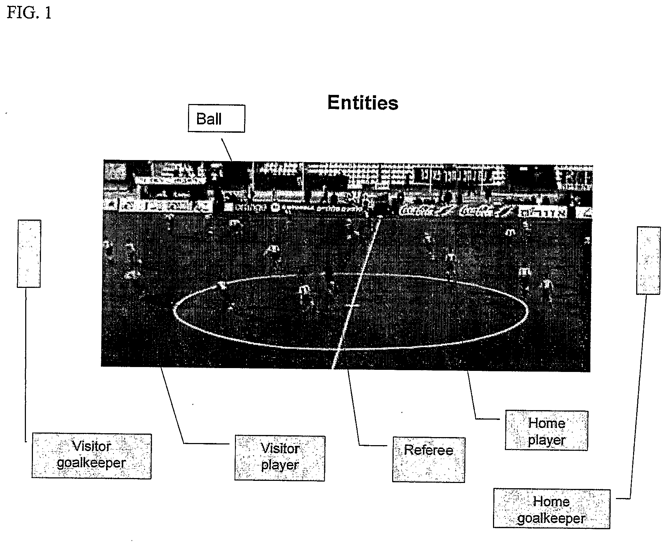

The following description is focused on soccer as an exemplary sports event. FIG. 1 shows various entities (also referred to as "objects") that appear in an exemplary soccer game: home and visitor (or "first and second" or "A and B") goalkeepers and players, one or more referees and the ball. The teams are separated and identifiable on the basis of their outfits (also referred to herein as "jerseys" or "shirts").

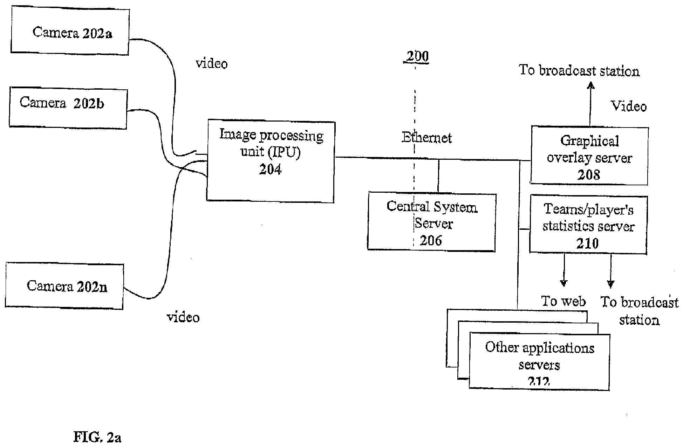

FIG. 2a shows a general block diagram of a system **200** for real-time object tracking and motion capture in sports events according to the present invention. System **200** comprises a plurality of cameras **202a-n** (n being any integer greater than 1) arranged in a spatial relationship to a sports playing field (not shown). The cameras are operative to provide video coverage of the entire playing field, each camera further operative to provide a video feed (i.e. a video stream including frames) to an image processing unit (IPU) **204.** In some embodiments, IPU **204** may include added functions and may be named image processing and player identification unit (IPPIU). IPU **204** communicates through an Ethernet or similar local area network (LAN) with a central server **206,** which is operative to make "system level" decisions where information from more than a single camera is required, like decision on a "lost player", 3D localization and tracking, object history considerations, etc.; with a graphical overlay server **208** which is operative to generate a graphical display such as a top view of the playing field with player icons (also referred to herein as a "schematic template"); with a team/player statistics server **210** which is operative to calculate team or player statistical functions like speed profiles, or accumulated distances based on object location information; and with a plurality of other applications servers **212** which are operative to perform other applications as listed in the Summary below. For example, a "3D graphics server **212"** may be implemented using a DVG (Digital Video Graphics), a PC cluster based rendering hardware with 3Designer, an on-air software module of Orad Hi-Tech Systems of Kfar-Saba, Israel.

An output of graphical overlay server **208** feeds a video signal to at least one broadcast station and is displayed on viewers' TV sets. Outputs of team/player statistics server **210** are fed to a web site or to a broadcast station.

In a first embodiment used for player assignment to teams and generation of a schematic template, cameras **202** are fixed cameras deployed together at a single physical location ("single location deployment") relative to the sports arena such that together they view the entire arena. Each camera covers one section of the playing field. Each covered section may be defined as the camera's field of view. The fields of view of any two cameras may overlap to some degree. In a second embodiment, the cameras are deployed in at least two different locations ("multiple location deployment") so that each point in the sports arena is covered by at least one camera from each location. This allows calculation of the 3D locations of objects that are not confined to the flat playing field (like the ball in a soccer match) by means of triangulation. Preferably, in this second embodiment, the players are individually identified by an operator with the aid of an additional remotely controlled pan/tilt/zoom camera ("robotic camera"). The robotic camera is automatically aimed to the predicted location of a player "lost" by the system (i.e. that the system cannot identify any more) and provides a high magnification view of the player to the operator. In a third embodiment, robotic cameras are located in multiple locations (in addition to the fixed cameras that are used for objects tracking and motion capture). The robotic cameras are used to automatically lock on a "lost player", to zoom in and to provide high magnification views of the player from multiple directions. These views are provided to an additional identification processor (or to an added function in the IPU) that captures and recognizes the player's jersey number (or another pattern on his outfit) from at least one view. In a fourth embodiment, all cameras are fixed high resolution cameras, enabling the automatic real time segmentation and localization of each player's body organs and extraction of a full 3D player motion. Preferably, in this fourth embodiment, the player's identification is performed automatically by means of a "player ID" processor that receives video inputs from all the fixed cameras. Additional robotic cameras are therefore not required. In a fifth embodiment, used for the generation of a "virtual camera flight" (VCF) effect, the outputs of multiple high resolution cameras deployed in multiple locations (typically a single camera in each location) are continuously recorded onto a multi-channel video recorder. A dedicated processor is used to create a virtual camera flight clip and display it as an instant replay.

### Player localization and tracking using cameras deployed in a single location

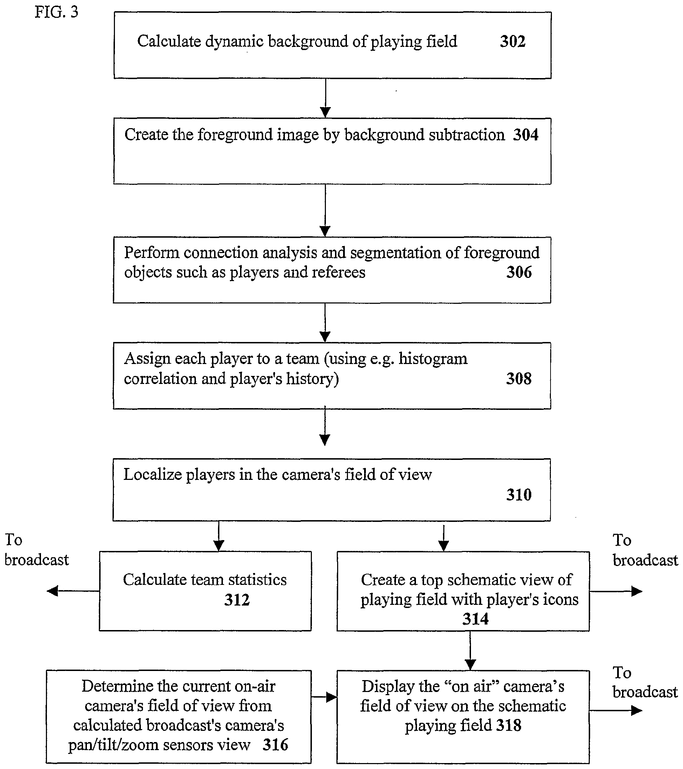

In one embodiment, system **200** is used to locate and track players in a team and assign each object to a particular team in real-time. The assignment is done without using any personal identification (ID). The process follows the steps shown in FIG. 3. The dynamic background of the playing field is calculated bv IPU **204** in step **302.** The dynamic background image is required in view of frequent lighting changes expected in the sports arena. It is achieved by means of median filter processing (or other appropriate methods) used to avoid the inclusion of moving objects in the background image being generated. The calculated background is subtracted from the video frame by IPU **204** to create a foreground image in step **304.** Separation of the required foreground objects (players, ball, referees, etc) from the background scene can be done using a chroma-key method for cases where the playing field has a more or less uniform color (like grass in a typical soccer field), by subtracting a dynamically updated "background image" from the live frame for the case of stationary cameras, or by a combination of both methods. The foreground/background separation step is followed by thresholding, binarization, morphological noise cleaning processes and connection analysis (connecting isolated pixels in the generated foreground image to clusters) to specify "blobs" representing foreground objects. This is performed by IPU **204** in step **306.** Each segmented blob is analyzed in step **308** by IPU **204** to assign the respective object to an identity group. Exemplarily, in a soccer match there are 6 identity groups - first team, second team, referees, ball, first goalkeeper, second goalkeeper. The blob analysis is implemented by correlating either the vertical color and/or intensity profiles or just the blob's color content (preferably all attributes) with pre-defined templates representing the various identity teams. Another type of blob analysis is the assignment of a given blob to other blobs in previous frames and to blobs identified in neighboring cameras, using methods like block matching and optical flow. This analysis is especially needed in cases of players' collisions and/or occlusions when a "joint blob" of two or more players needs to be segmented into its "components", a.k.a. the individual players. The last step in the blob analysis is the determination of the object's location in the camera's field of view. This is done is step **310.**

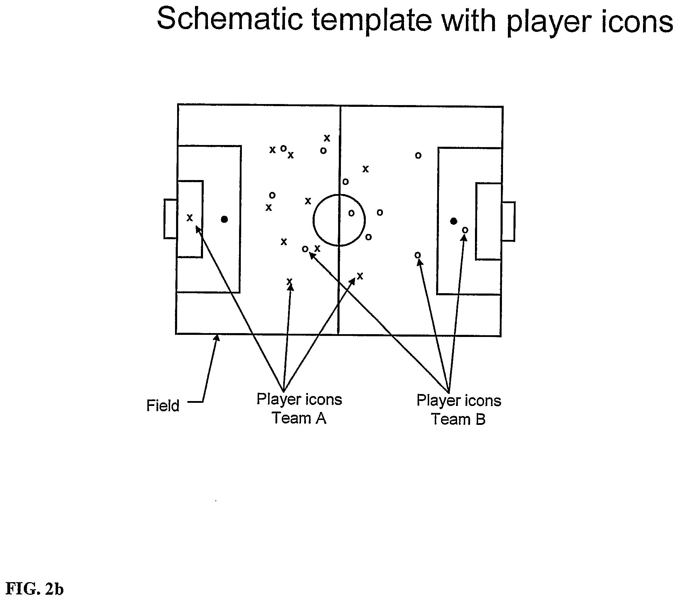

Once the assignment stage is finished, system **200** can perform additional tasks. Exemplarily, team statistics (e.g. team players' average speed, the distance accumulated by all players from the beginning of the match, and field coverage maps) may be calculated from all players' locations data provided by the IPU in step **312.** The team statistics are calculated after assigning first the players to respective teams. The schematic template (shown in FIG. 2b) may be created from the localization/teams assignment data inputs by the graphical overlay server **208** in step **314.**

Another task that may be performed by system **200** includes displaying the current "on-air" broadcast's camera field of view on the schematic template. The process described exemplarily in FIG. 3 continues as follows. Knowledge of the pan, tilt and zoom readings of the current "on air" camera enables the geometric calculation and display (by system server **206** or another processor) of the momentary "on air" camera's field of view on the schematic playing field in step **316.** The "on air" broadcast camera's field of view is then displayed on the template in step **318.**

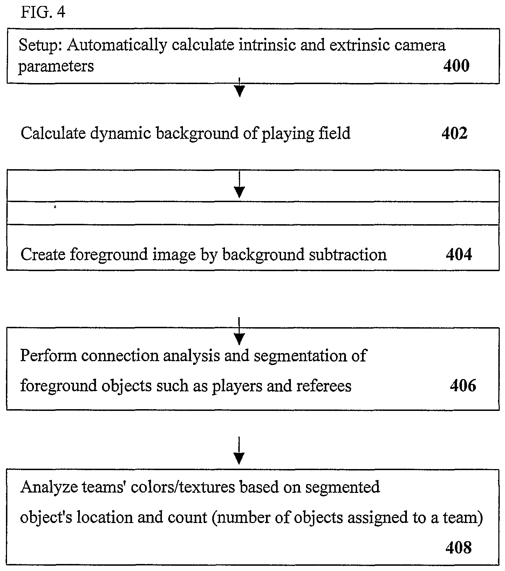

A yet another task that may be performed by system **200** includes an automatic system setup process, as described exemplarily in FIG. 4. System server **206** may automatically learn "who is who" according to game rules, location and number of objects wearing the same outfit, etc. In the game preparation stage, there is no need for an operator to provide the system with any indication of the type "this is goalkeeper A, this is the referee, etc". The first setup procedure as described in step **400** includes the automatic calculation of the intrinsic (focal length, image center in pixel coordinates, effective pixel size and radial distortion coefficient of the lens) and extrinsic (rotation matrix and translation vector) camera parameters using known software libraries such as Intel's OpenCV package. Steps **402, 404** and **406** are identical with steps **302, 304** and **306** in FIG. 3. In step **408,** the team colors and/or uniform textures are analyzed by the IPU based on the locations of each segmented object and their count. For example, the goalkeeper of team 1 is specified by (a) being a single object and (b) a location near goal 1. The color and intensity histograms, as well as their vertical distributions, are then stored into the IPU to be later used for the assignment step of blobs to teams.

### Players and ball localization, tracking and identification using cameras deployed in multiple locations

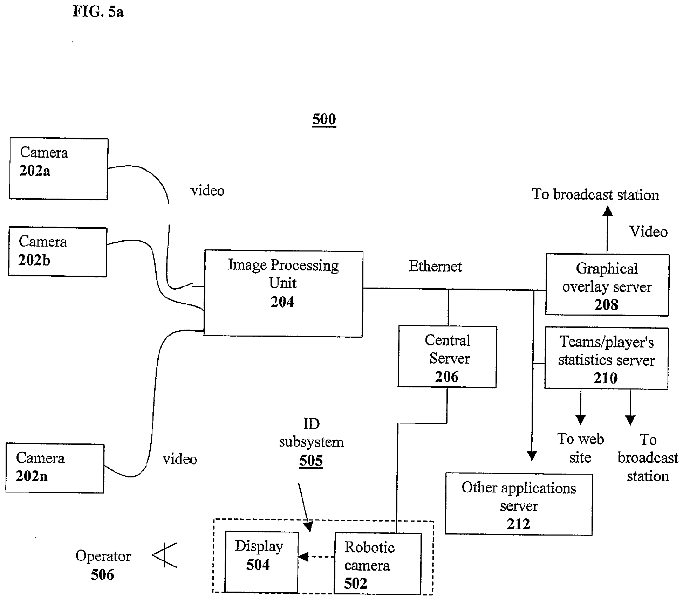

FIG. 5a shows a block diagram of a tracking system **500** in which cameras are deployed in at least two different locations around the sports field in order to detect and localize an object not confined to the flat playing field (e.g. a ball) by means of triangulation (measuring directions from 2 separated locations). System **500** comprises in addition to the elements of system **200** a robotic video camera **502** with a remotely controlled zoom mechanism, the camera mounted on a remotely controlled motorized pan and tilt unit. Such robotic cameras are well known in the art, and manufactured for example by Vinten Inc., 709 Executive Blvd, Valley Cottage, NY 10989, USA. System **500** further comprises a display **504** connected to the robotic camera **502** and viewed by an operator **506.** Camera **502** and display **504** form an ID subsystem **505.**

The ball is segmented from the other objects on the basis of its size, speed and shape and is then classified as possessed, flying or rolling on the playing field. When possessed by a player, the system is not likely to detect and recognize the ball and it has to guess, based on history, which player now possesses the ball. A rolling ball is situated on the field and its localization may be estimated from a single camera. A flying ball's 3D location may be calculated by triangulating 2 cameras that have detected it in a given frame. The search zone for the ball in a given frame can be determined based on its location in previous frames and ballistic calculations. Preferably, in this embodiment, players are personally identified by an operator to generate an individual player statistical database.

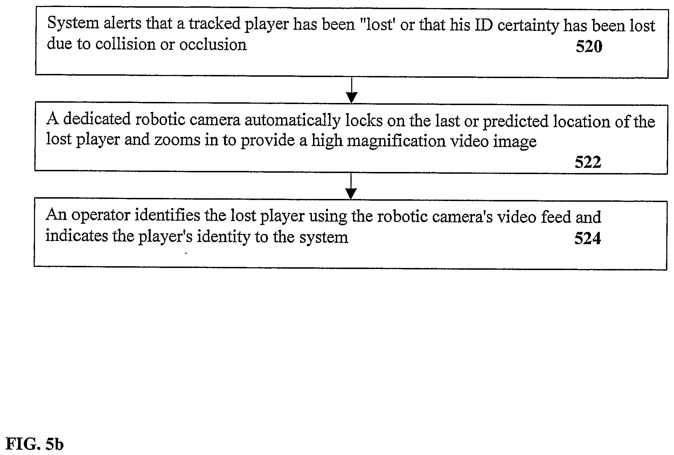

FIG. 5b shows a flow chart of a method for individual player identification implemented by sub-system 505, using a manual ID provided by the operator with the aid of the robotic camera. The tracking system provides an alert that a tracked player is either "lost" (i.e. the player is not detected by any camera) or that his ID certainty is low in step **520.** The latter may occur e.g. if the player is detected but his ID is in question due to a collision between two players. The robotic camera automatically locks on the predicted location of this player (i.e. the location where the player was supposed to be based on his motion history) and zooms in to provide a high magnification video stream in step **522.** The operator identifies the "lost" player using the robotic camera's video stream (displayed on a monitor) and indicates the player's identity to the system in step **524.** As a result, the system now knows the player's ID and can continue the accumulation of personal statistics for this player as well as performance of various related functions.

Note that the system knows a player's location in previous frames, and it is assumed that a player cannot move much during a frame period (or even during a few frame periods). The robotic camera field of view is adapted to this uncertainty, so that the player will always be in its frame.

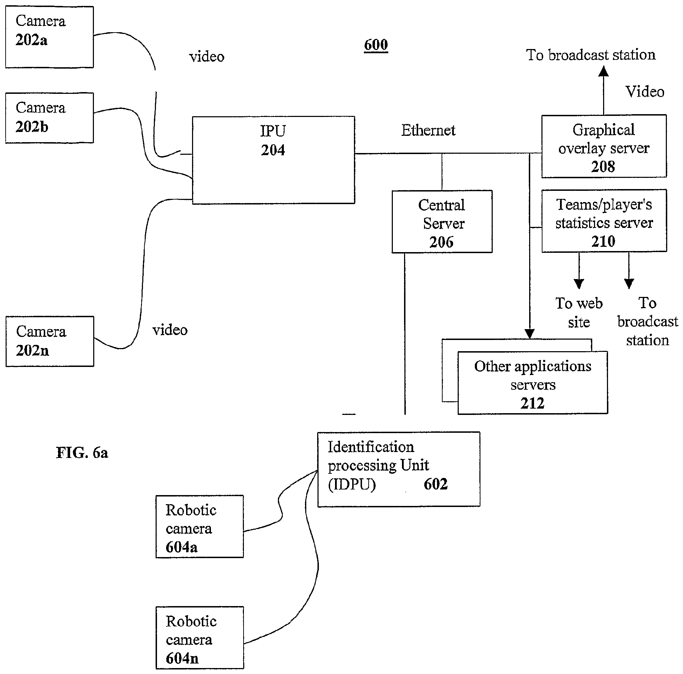

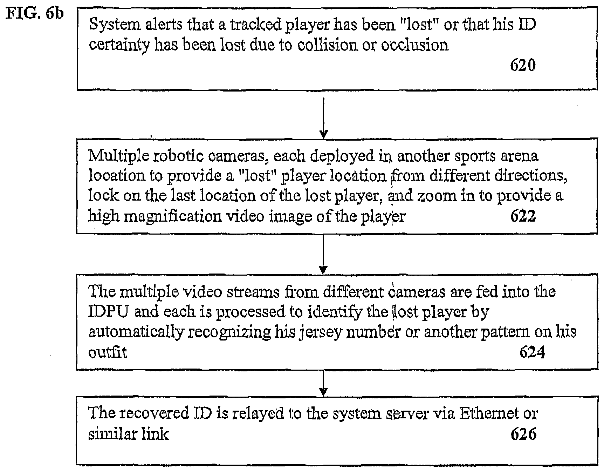

FIG. 6a shows an automatic players/ball tracking and motion capture system **600** based on multiple (typically 2-3) pan/tilt/zoom robotic cameras **604 a ...n** for automatic individual player identification. FIG. 6b shows a flow chart of a method of use. The system in FIG. 6a comprises in addition to the elements of system **200** an Identification Processing Unit (IDPU) 602 connected through a preferably Ethernet connection to system server **206** and operative to receive video streams from multiple robotic cameras **604.**

In use, as shown in FIG. 6b, the method starts with step **620,** which is essentially identical with step **520** above. Step **622** is similar to step **522,** except that multiple robotic cameras (typically 2-3) are used instead of a single one. In step **624,** the multiple video streams are fed into IDPU **602** and each stream is processed to identify a player by automatically recognizing his shirt's number or another unique pattern on his outfit. The assumption is that the number or unique pattern is exposed by at least one of the video streams, preferably originating from different viewpoints. The recognized player's ID is then conveyed to the system server (**206**) in step **626.**

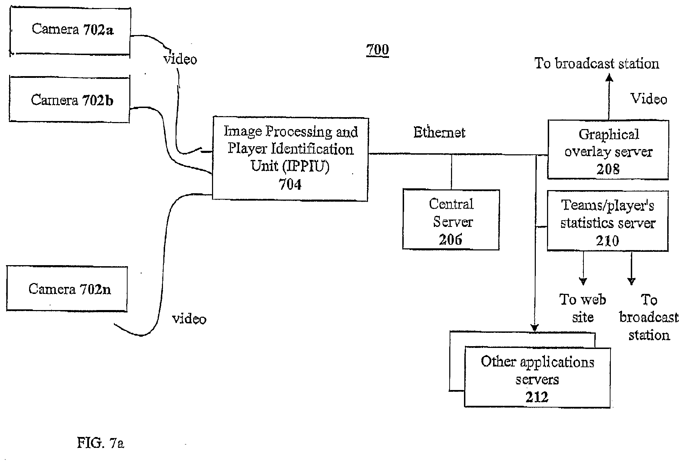

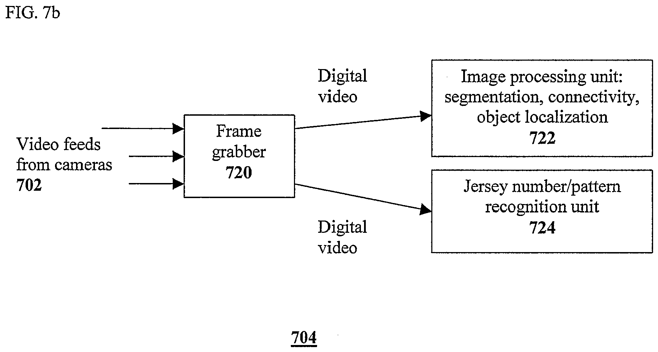

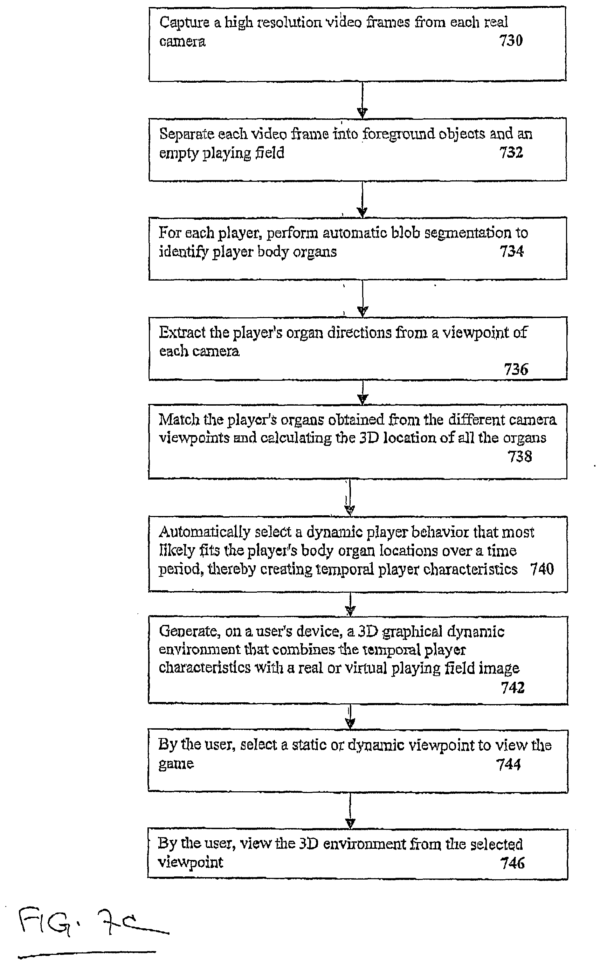

FIG. 7a shows an automatic objects tracking and motion capture system **700** based on multiple high-resolution fixed cameras **702a...702n**. System **710** comprises the elements of system **200**, except that cameras **702** are coupled to and operative to feed video streams to an image processing and player identification unit (IPPIU) **704,** which replaces IPU **204** in FIG. 2a. Alternatively, the added functions of IPPIU **704** may be implemented in IPU **204.** FIG. 7b shows schematically details of IPPIU **704.** IPPIU **704** comprises a frame grabber **720** coupled to an image processor **722** and to a jersey number/pattern recognition (or simply "recognition") unit **724.** In use, frame grabber **720** receives all the frames in the video streams provided by cameras **702** and provides two digital frame streams, one to unit **722** and another to unit **724.** Unit **722** performs the actions of object segmentation, connectivity, blob analysis, etc. and provides object locations on the playing field as described above. Unit **722** may also provide complete motion capture data composed of 3D locations of all players' body parts. Recognition unit **724** uses pattern recognition algorithms to extract and read the player's jersey number or another identifying pattern and provides the player's ID to the system server. This process is feasible when the resolution of cameras **702** is so chosen to enable jersey number/pattern recognition.

In contrast with prior embodiments above, system **700** does not use robotic cameras for player identification. Fixed high resolution cameras **702a....702n** are used for both tracking/motion capture and individual players identification

### Generation of a 3D graphical representation of the real match in real time in a computer game

The information obtained by system **700** may be used for generation of a 3D graphical representation of the real match in real time in a computer game. The resolution of the cameras shown in Fig 7a can be chosen in such a way to enable a spatial resolution of at least 1cm on each point on the playing field. Such resolution enables full motion capture of the player as shown in 7c. The high resolution video from each camera is first captured in step 730 by frame grabber **720.** The video is then separated into foreground objects and an empty playing field in step **732** as explained in steps **302** and **304** in Fig. 3 by IPPIU **704.** Automatic foreground blobs segmentation into player's head, torso, hands and legs is then performed in step **734** by IPPIU **704** using pattern recognition algorithms that are well known in the art (see e.g. J.M. Buades et al, "Face and hands segmentation in color images and initial matching", Proc. International Workshop on Computer Vision and Image Analysis, Palmas de Gran Canaria, Dec. 2003, pp. 43-48). The player's organs or joints directions from the viewpoint of each camera are extracted in step **736** by IPPIU **704.** Specific player's joints or organs detected by different cameras are then matched one to another based on their locations on the playing field and on some kinematic data (general morphological knowledge of the human body) in step **738** by central server **206.** A triangulation based calculation of the locations of all body organs of all players is then done in step **738** as well by central server **206.**

An automatic selection of a player's dynamic (temporal) behavior that most likely fits his body's joints locations over a time period is then performed in step **740** using least squares or similar techniques by 3D graphics applications server **212.** This process can be done locally at the application server **212** side or remotely at the user end. In the latter case, the joints' positions data may be distributed to users using any known communication link, preferably via the World Wide Web.

In step **742,** a dynamic graphical environment may be created at the user's computer. This environment is composed of 3D specific player models having temporal behaviors selected in step **740,** composed onto a 3D graphical model of the stadium or onto the real playing field separated in step **732.** In step **744,** the user may select a static or dynamic viewpoint to watch the play. For example, he/she can decide that they want to watch the entire match from the eyes of a particular player. The generated 3D environment is then dynamically rendered in step **746** to display the event from the chosen viewpoint. This process is repeated for every video frame, leading to a generation of a 3D graphical representation of the real match in real time.

### Virtual Camera Flight

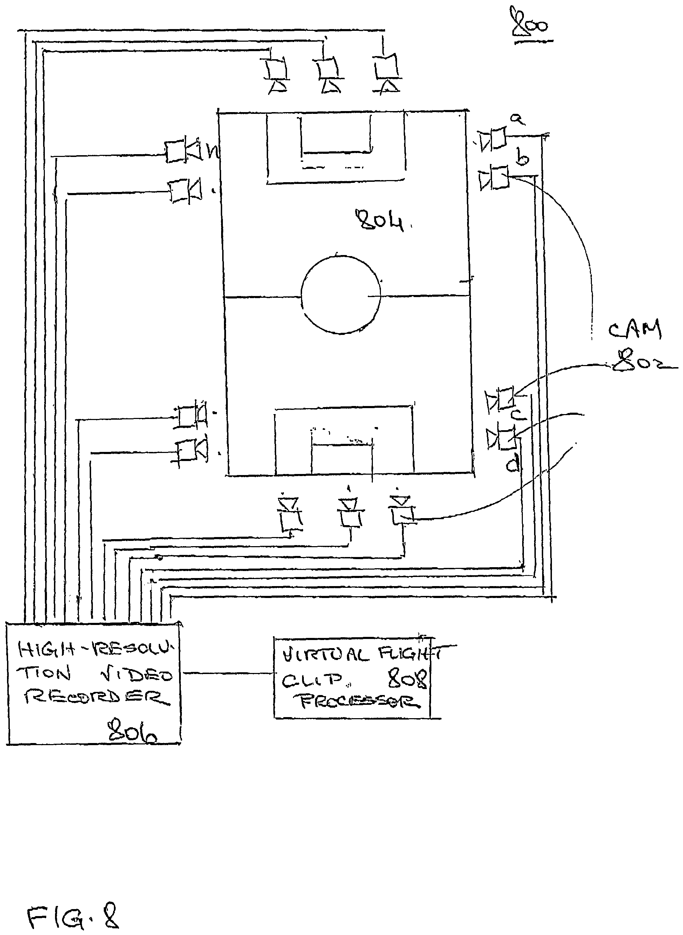

FIG. 8 shows an embodiment of a system **800** of the present invention used to generate a "virtual camera flight"- type effect (very similar to the visual effects shown in the movie "The Matrix") for a sports event. The effect includes generation of a "virtual flight clip" (VFC). System **800** comprises a plurality of high-resolution fixed cameras **802a-n** arranged in groups around a sports arena **804.** Each group includes at least one camera. All cameras are connected to a high resolution video recorder **806.** The cameras can capture any event in a game on the playing field from multiple directions in a very high spatial resolution (∼1cm). All video outputs of all the cameras are continuously recorded on recorder **806.** A VFC processor **808** is then used to pick selective recorded "real" frames of various cameras, create intermediate synthesized frames, arrange all real and synthesized frames in a correct order and generate the virtual flight clip intended to mimic the effect in "The Matrix" movie as an instant replay in sports events.. The new video clip is composed of the real frames taken from the neighboring cameras (either simultaneously, if we "freeze" the action, or at progressing time periods when we let the action move slowly) as well as many synthesized (interpolated) frames inserted between the real ones.

In another embodiment, system **800** may comprise the elements of system **700** plus video recorder **806** and VFC processor **808** and their respective added functionalities

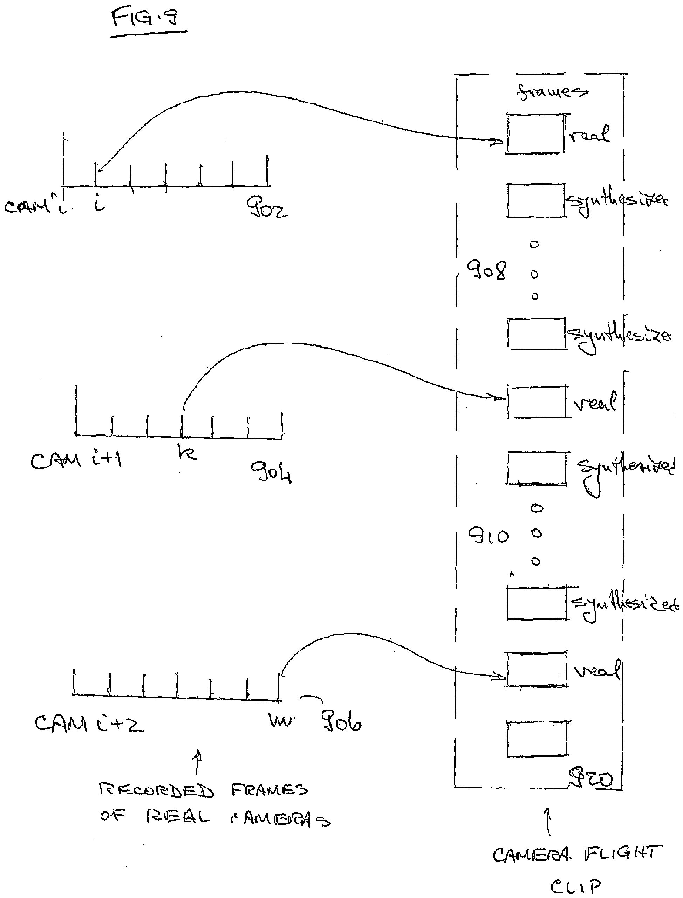

The process is schematically described in FIG. 9. Three symbolic representations of recorded frame sequences of 3 consecutive cameras, CAMᵢ, CAMᵢ₊₁ and CAMᵢ₊₂ are shown as **902, 904** and **906,** respectively. The VFC processor first receives a production requirement as to the temporal dynamics with which the play event is to be replayed. The VFC processor then calculates the identity of real frames that should be picked from consecutive real cameras (frames j, k, and m from cameras i, i+1 and i+2 respectively in this example) to create the sequences of intermediate synthesized frames, **908** and **910** respectively, to generate the virtual camera flight clip symbolically represented as **920.**

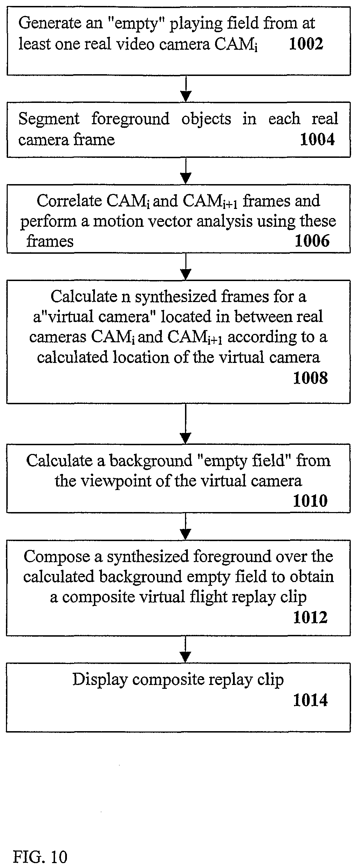

FIG. 10 shows a functional flow chart of the process of Fig. 9. An "empty" playing field is generated as described in step **302** above, using a sequence of video frames from at least one of the cameras in step **1002.** Foreground objects are segmented in step **1004.** The frames from CAMᵢ and CAMᵢ₊₁ are spatially correlated using known image processing methods like block matching, and a motion vector analysis is performed using optical flow algorithms in step **1006..** Both types of algorithms are well known in the art. A virtual camera having the same optical characteristics as the real ones then starts a virtual flight between the locations of real cameras CAMᵢ and CAMᵢ₊₁. Both the location of the virtual camera (in the exact video frame timing) and the predicted foreground image for that location are calculated in step **1008** using pixel motion vector analysis and the virtual camera location determined according to the preprogrammed virtual camera flight. The virtual camera background "empty field" is calculated from the same viewpoint in step **1010** and the synthesized foreground and background portions are then composed in step **1012. n** such synthesized frames are generated between the real frames of CAMᵢ and CAMᵢ₊₁. The same procedure is now repeated between real CAMᵢ₊₁ and CAMᵢ₊₂ and so on. A video clip composed of such multiple synthesized frames between real ones is generated and displayed to TV viewers in step **1014** as an instant replay showing the play as if it was continuously captured by a flying real camera.

In addition, citation or identification of any reference in this application shall not be construed as an admission that such reference is available as prior art to the present invention.

While the invention has been described with respect to a limited number of embodiments, it will be appreciated that many variations, modifications and other applications of the invention may be made, as long as they are covered by the appended claims.

## Claims

1. A system (200) for real-time object localization, and tracking and object identification in a sports event comprising:
a. a plurality of cameras (202a-n) operative to capture video of a sports playing field including objects located therein;
b. an image processing unit (204) operative to automatically:
receive video frames from each camera (202a-n) and to detect at least some of the objects in at least some of the frames and segmenting foreground images corresponding to the objects, from background images from at least some of the frames, associating pixels from the foreground images to define blobs;
analyze each blob against predefined visual criteria to assign the object corresponding to the blob to an identity group involved in the sports event on the playing field; and,
determine the location of the object corresponding to the blob based on the location of the blob in the field of view of the camera (310); and,
c. a central server (206) operative to provide real-time localization and tracking information on the detected objects based on determined locations of each of the detected objects;
wherein the cameras (202a-n) include fixed cameras, each camera being positioned at a single location relative to said sports playing field, whereby together the cameras (202a-n) are viewing substantially the entire sports playing field.
**characterized in that** the image processing unit is operative to assign an identity group to each blob based on a count with respect to other blobs and an analysis of the location of the blob on the sports playing field of the background.

2. The system of claim 1, wherein the detected object is a player, wherein the identity group is a team, and wherein the assignment of the player to a team is automatic (308), without need for an operator to mark the player.

3. The system of claim 1, wherein the central server (206) is additionally operative to perform an automatic setup and calibration process, without need for an operator to mark the player during a preparatory stage.

4. The system of claim 2, further comprising:
d. a graphical overlay server (208) coupled to the central server (206) and operative to generate a graphical display of the sports event based on the localization and tracking information.

5. The system of claim 4, wherein the graphical display includes a schematic playing field template with icons (player icons team A, player icons Team B) representing the objects assigned to teams (A, B).

6. The system of claim 2, further comprising
d. a statistics server (210) coupled to the central server (206) and operative to calculate statistical functions (308) related to the event based on the localization and tracking information.

7. The system of claim 4, operative to transmit a dynamic graphical representation of the schematic playing field template and objects imposed thereon to an external user.

8. The system of claim 5, wherein the central server (206) is additionally operative to display a current on-air broadcast camera field of view on the schematic playing field template (318).

9. In a sports event taking place on a playing field, a method for locating, tracking and assigning objects to respective identity group in real-time comprising the steps of:
a. providing a plurality of cameras (202a-n) operative to capture a portion of the playing field and objects located therein;
b. providing an image processing unit (204) operative to automatically:
- receive video frames from each camera (202a-n) and to detect at least some of the objects in at least some of the frames and segmenting foreground images corresponding to the objects, from background images from at least some of the frames, associating pixels from the foreground images to define blobs;
- analyze each blob against predefined visual criteria to assign the object corresponding to the blob to an identity group involved in the sports event on the playing field; and,
- determine the location of the object corresponding to the blob based on the location of the blob in the field of view of the camera (310); and,
c. providing a central server (206) operative to provide real-time localization and tracking information on each detected player based on determined locations of each of the detected objects; and
wherein the cameras (202a-n) include fixed cameras (202a-n), each camera being positioned at a single location relative to said sports playing field, together the cameras (202a-n) are viewing substantially the entire sports playing field.
**characterized in that** the step of providing a central server includes providing a central server further operative to assign each object to a respective identity group without using any personal identification.

10. The method of claim 9, wherein the object is a player, wherein the identity group is a respective team to which the player is assigned.

11. The method of claim 9, wherein the assignment includes:
i. calculating a dynamic background image (302),
ii. subtracting the dynamic background image to create a foreground image (304),
iii. separating foreground objects in the foreground image (732),
iv. specifying blobs representing each separated foreground object (734), and
v. assigning each representative blob to the respective identity group.

12. The method of claim 10, further comprising the step of
d. providing a graphical overlay server (208) coupled to the central server (206) and operative to generate a graphical display of the sports event based on the localization and tracking information.

13. The method of claim 12, wherein the graphical display includes a schematic template of the playing field with overlaid player icons.

14. The method of claim 10, further comprising the step of:
d. providing a statistics server (210) coupled to the central server (206) and operative to calculate statistical functions related to the event based on the localization and tracking information.

15. The method of claim 13, further comprising the step of displaying a current on-air broadcast camera field of view on the schematic template (318).

## Patentansprüche

1. System (200) zur Echtzeitlokalisierung von Objekten sowie zum Verfolgen und Identifizieren von Objekten bei einer Sportveranstaltung, Folgendes umfassend:
a. eine Vielzahl von Kameras (202 a-n), funktionsfähig zum Aufnehmen von Videos eines Sportspielfeldes einschließlich von Objekten, die sich darin befinden;
b. eine Bildverarbeitungseinheit (204), funktionsfähig zum automatischen:
Empfangen von Videobildern von jeder Kamera (202 a-n), zum Erkennen mindestens einiger der Objekte in mindestens einigen von den Bildern, zum Segmentieren von Vordergrundbildern entsprechend den Objekten, von Hintergrundbildern aus mindestens einigen der Bilder und zum Assoziieren von Pixeln aus den Vordergrundbildern zum Definieren von Blobs;
Analysieren jedes Blobs im Vergleich zu vordefinierten visuellen Kriterien zum Zuordnen des Objekts entsprechend des Blobs zu einer Identitätsgruppe, die auf dem Spielfeld an der Sportveranstaltung beteiligt ist; und
Bestimmen der Position des Objekts entsprechend des Blobs anhand der Position des Blobs im Sichtfeld der Kamera (310); sowie
c. einen Zentralserver (206), funktionsfähig zum Bereitstellen von Echtzeit-Lokalisierungs- und Verfolgungsinformationen zu den erkannten Objekten anhand der ermittelten Positionen für jedes der erkannten Objekte;
wobei die Kameras (206 a-n) Festkameras einschließen, jede Kamera an einer einzigen Position in Bezug auf das Sportspielfeld positioniert ist und wobei die Kameras (202 a-n) zusammen im Wesentlichen das gesamte Sportspielfeld betrachten,
**dadurch gekennzeichnet, dass** die Bildverarbeitungseinheit zum Zuweisen einer Identitätsgruppe zu jedem Blob anhand einer Zählung in Bezug auf andere Blobs und einer Analyse der Position des Blobs auf dem Sportspielfeld des Hintergrunds funktionsfähig ist.

2. System nach Anspruch 1, wobei das erkannte Objekt ein Spieler ist, wobei die Identitätsgruppe ein Team ist, und wobei die Zuweisung des Spielers zu einem Team automatisch (308) erfolgt, ohne dass ein Bediener den Spieler markieren muss.

3. System nach Anspruch 1, wobei der Zentralserver (206) darüber hinaus zum Durchführen eines automatischen Einrichtungs- und Kalibrierungsprozesses funktionsfähig ist, ohne dass ein Bediener während einer Vorbereitungsphase den Spieler markieren muss.

4. System nach Anspruch 2, ferner umfassend:
d. einen Grafiküberlagerungsserver (208), der mit dem Zentralserver (206) gekoppelt ist und zum Erzeugen einer grafischen Anzeige der Sportveranstaltung anhand der Lokalisierungs- und Verfolgungsinformationen funktionsfähig ist.

5. System nach Anspruch 4, wobei die grafische Anzeige eine schematische Spielfeldvorlage mit Symbolen (Spielersymbole Team A, Spielersymbole Team B) enthält, welche die Objekte darstellen, die den Teams (A, B) zugewiesen wurden.

6. System nach Anspruch 2, ferner umfassend:
d. einen Statistikserver (210), der mit dem Zentralserver (206) gekoppelt ist und zum Berechnen von Statistikfunktionen (308), die sich auf die Veranstaltung beziehen, anhand der Lokalisierungs- und Verfolgungsinformationen funktionsfähig ist.

7. System nach Anspruch 4, das zum Übertragen einer dynamischen Grafikdarstellung der schematischen Spielfeldvorlage und der darauf abgebildeten Objekte an einen externen Nutzer funktionsfähig ist.

8. System nach Anspruch 5, wobei der Zentralserver (206) darüber hinaus zum Anzeigen eines aktuellen Kamerasichtfeldes einer On-Air-Ausstrahlung auf der schematischen Spielfeldvorlage (318) funktionsfähig ist.

9. Verfahren zum Lokalisieren, Verfolgen und Zuweisen von Objekten zu entsprechenden Identitätsgruppen in Echtzeit bei einer auf einem Spielfeld stattfindenden Sportveranstaltung, die folgenden Schritte umfassend:
a. Bereitstellen einer Vielzahl von Kameras (202 a-n), die zum Aufnehmen eines Teils des Spielfelds und der darin befindlichen Objekte funktionsfähig sind;
b. Bereitstellen einer Bildverarbeitungseinheit (204), funktionsfähig zum automatischen:
- Empfangen von Videobildern von jeder Kamera (202 a-n) und zum Erkennen mindestens einiger der Objekte in mindestens einigen von den Bildern, zum Segmentieren von Vordergrundbildern entsprechend den Objekten, von Hintergrundbildern aus mindestens einigen der Bilder und zum Assoziieren von Pixeln aus den Vordergrundbildern zum Definieren von Blobs;
Analysieren jedes Blobs im Vergleich zu vordefinierten visuellen Kriterien zum Zuordnen des Objekts entsprechend des Blobs zu einer Identitätsgruppe, die auf dem Spielfeld an der Sportveranstaltung beteiligt ist; und
Bestimmen der Position des Objekts entsprechend des Blobs anhand der Position des Blobs in dem Sichtfeld der Kamera (310); und
c) Bereitstellen eines Zentralservers (206), der zum Bereitstellen von Echtzeit-Lokalisierungs- und Verfolgungsinformationen zu jedem erkannten Spieler anhand der ermittelten Positionen für jedes der erkannten Objekte funktionsfähig ist; und
wobei die Kameras (202 a-n) Festkameras (202 a-n) einschließen, jede Kamera an einer einzigen Position in Bezug auf das Sportspielfeld positioniert wird und die Kameras (202 a-n) zusammen im Wesentlichen das gesamte Sportspielfeld betrachten,
**dadurch gekennzeichnet, dass** der Schritt des Bereitstellens eines Zentralservers das Bereitstellen eines Zentralservers enthält, der ferner zum Zuweisen jedes Objekts zu einer entsprechenden Identitätsgruppe ohne Verwendung einer persönlichen Identifikation funktionsfähig ist.

10. Verfahren nach Anspruch 9, wobei das Objekt ein Spieler ist und wobei die Identitätsgruppe ein entsprechendes Team ist, dem der Spieler zugewiesen ist.

11. Verfahren nach Anspruch 9, wobei die Zuweisung das
i. Berechnen eines dynamischen Hintergrundbildes (302),
ii. Subtrahieren des dynamischen Hintergrundbildes zum Erzeugen eines Vordergrundbildes (304),
iii. Separieren der Vordergrundobjekte in dem Vordergrundbild (732),
iv. Spezifizieren von Blobs, die jedes separierte Vordergrundobjekt (734) repräsentieren, und
v. Zuweisen jedes repräsentativen Blobs zur entsprechenden Identitätsgruppe
einschließt.

12. Verfahren nach Anspruch 10, ferner umfassend den Schritt des:
d. Bereitstellens eines Grafiküberlagerungsservers (208), der mit einem Zentralserver (206) gekoppelt ist und zum Erzeugen einer grafischen Anzeige der Sportveranstaltung anhand der Lokalisierungs- und Verfolgungsinformationen funktionsfähig ist.

13. Verfahren nach Anspruch 12, wobei die grafische Anzeige eine schematische Vorlage des Spielfeldes mit überlagerten Spielersymbolen enthält.

14. Verfahren nach Anspruch 10, ferner umfassend den Schritt des:
d. Bereitstellens eines Statistikservers (210), der mit dem Zentralserver (206) gekoppelt ist und zum Berechnen von Statistikfunktionen, die sich auf die Veranstaltung beziehen, anhand der Lokalisierungs- und Verfolgungsinformationen funktionsfähig ist.

15. Verfahren nach Anspruch 13, ferner umfassend den Schritt des Anzeigens eines aktuellen Kamerasichtfeldes einer On-Air-Fernsehausstrahlung auf der schematischen Vorlage (318).

## Revendications

1. Système (200) pour la localisation d'objets en temps réel, et pour le suivi et l'identification d'un objet dans un événement sportif comprenant:
a. une pluralité de caméras (202a-n) fonctionnant pour capturer une vidéo d'un terrain de jeu sportif comportant des objets situés dans celui-ci ;
b. une unité de traitement d'images (204) fonctionnant pour automatiquement:
recevoir des trames vidéo à partir de chaque caméra (202a-n) et détecter au moins certains des objets dans au moins certaines des trames et segmenter des images de premier plan correspondant aux objets, à partir des images d'arrière-plan à partir d'au moins certaines des trames, en associant des pixels provenant des images de premier plan pour définir les grands objets binaires ;
analyser chaque grand objet binaire par rapport à des critères visuels prédéfinis pour affecter l'objet correspondant au grand objet binaire à un groupe d'identités impliqué dans l'événement sportif sur le terrain de jeu; et,
déterminer l'emplacement de l'objet correspondant au grand objet binaire sur la base de l'emplacement du grand objet binaire dans le champ de vision de la caméra (310); et
c. un serveur central (206) fonctionnant pour fournir des informations de suivi et de localisation en temps réel sur les objets détectés sur la base des emplacements déterminés de chacun des objets détectés;
dans lequel les caméras (202a-n) comportent des caméras fixes, chaque caméra étant positionnée à un emplacement unique par rapport audit terrain de jeu sportif, moyennant quoi les caméras (202a-n) visualisent conjointement sensiblement le terrain de jeu sportif entier,
**caractérisé en ce que** l'unité de traitement d'images peut fonctionner pour affecter un groupe d'identités à chaque grand objet binaire sur la base d'un décompte par rapport aux autres grands objets binaires et une analyse de l'emplacement du grand objet binaire sur le terrain de jeu sportif de l'arrière-plan.

2. Système de la revendication 1, dans lequel l'objet détecté est un joueur, dans lequel le groupe d'identités est une équipe, et dans lequel l'affectation du joueur à une équipe est automatique (308), sans qu'il soit nécessaire qu'un utilisateur marque le joueur.

3. Système de la revendication 1, dans lequel le serveur central (206) fonctionnant également pour effectuer un processus d'étalonnage et de configuration automatique, sans qu'il soit nécessaire qu'un utilisateur marque le joueur au cours d'une étape préparatoire.

4. Système de la revendication 2, comprenant en outre:
d. un serveur de superposition graphique (208) couplé au serveur central (206) et fonctionnant pour générer un affichage graphique de l'événement sportif sur la base des informations de suivi et de localisation.

5. Système de la revendication 4, dans lequel l'affichage graphique comporte un modèle de terrain de jeu schématique ayant des icônes (icônes de joueurs équipe A, icônes de joueurs équipe B) représentant les objets affectés aux équipes (A, B).

6. Système de la revendication 2, comprenant en outre:
d. un serveur de statistiques (210) couplé au serveur central (206) et fonctionnant pour calculer des fonctions statistiques (308) liées à l'événement sur la base des informations de suivi et de localisation.

7. Système de la revendication 4, fonctionnant pour transmettre une représentation graphique dynamique du modèle de terrain de jeu schématique et des objets imposés sur celui-ci à un utilisateur externe.

8. Système de la revendication 5, dans lequel le serveur central (206) fonctionne également pour afficher un champ de vision de caméra de diffusion en direct actuelle sur le modèle de terrain de jeu schématique (318).

9. Procédé, dans un événement sportif se déroulant sur un terrain de jeu, pour localiser, suivre et affecter des objets à un groupe d'identités respectif en temps réel, comprenant les étapes consistant:
a. à fournir une pluralité de caméras (202a-n) fonctionnant pour capturer une partie du terrain de jeu et des objets situés dans celui-ci;
b. à fournir une unité de traitement d'images (204) fonctionnant pour automatiquement:
- recevoir des trames vidéo à partir de chaque caméra (202a-n) et détecter au moins certains des objets dans au moins certaines des trames et segmenter des images de premier plan correspondant aux objets, à partir des images d'arrière-plan provenant d'au moins certaines des trames, en associant des pixels provenant des images de premier plan pour définir des grands objets binaires;
- analyser chaque grand objet binaire par rapport à des critères visuels prédéfinis pour affecter l'objet correspondant au grand objet binaire à un groupe d'identités impliqué dans l'événement sportif sur le terrain de jeu; et,
- déterminer l'emplacement de l'objet correspondant au grand objet binaire sur la base de l'emplacement du grand objet binaire dans le champ de vision de la caméra (310); et,
c. à fournir un serveur central (206) fonctionnant pour fournir des informations de suivi et de localisation en temps réel sur chaque joueur détecté sur la base des emplacements déterminés de chacun des objets détectés ; et
dans lequel les caméras (202a-n) comportent des caméras fixes (202an), chaque caméra étant positionnée à un emplacement unique par rapport audit terrain de jeu sportif, les caméras (202a-n) visionnent conjointement sensiblement le terrain de jeu sportif entier,
**caractérisé en ce que** l'étape consistant à fournir un serveur central comporte la fourniture d'un serveur central fonctionnant en outre pour affecter chaque objet à un groupe d'identités respectif sans utiliser aucune identification personnelle.

10. Procédé de la revendication 9, dans lequel l'objet est un joueur, dans lequel le groupe d'identités est une équipe respective à laquelle le joueur est affecté.

11. Procédé de la revendication 9, dans lequel l'affectation comporte le fait:
i. de calculer une image d'arrière-plan dynamique (302),
ii. de soustraire l'image d'arrière-plan dynamique pour créer une image de premier plan (304),
iii. de séparer les objets de premier plan dans l'image de premier plan (732),
iv. de spécifier des grands objets binaires représentant chaque objet de premier plan séparé (734), et
v. d'affecter chaque grand objet binaire représentatif au groupe d'identités respectif.

12. Procédé de la revendication 10, comprenant en outre l'étape consistant à:
d. fournir un serveur de superposition graphique (208) couplé au serveur central (206) et fonctionnant pour générer un affichage graphique de l'événement sportif sur la base des informations de suivi et de localisation.

13. Procédé de la revendication 12, dans lequel l'affichage graphique comporte un modèle schématique du terrain de jeu ayant des icônes de joueurs superposées.

14. Procédé de la revendication 10, comprenant en outre l'étape consistant à:
d. fournir un serveur de statistiques (210) couplé au serveur central (206) et fonctionnant pour calculer des fonctions statistiques liées à l'événement sur la base des informations de suivi et de localisation.

15. Procédé de la revendication 13, comprenant en outre l'étape d'affichage d'un champ de vision de caméra de diffusion en direct actuelle sur le modèle schématique (318).
